# EUROPEAN PATENT APPLICATION

(11) **EP 4 672 237 A1**
(43) Date of publication of application: **31.12.2025**
(21) Application number: 24185480.1
(22) Date of filing: 28.06.2024
(51) Int. Cl.: G10L 21/02, G10L 25/30, G10L 21/0208, G10L 21/0216

(54) **AUDIO DEVICE WITH UNCERTAINTY QUANTIFICATION USING STOCHASTIC INFERENCE AND RELATED METHODS**

(71) Applicant: GN Hearing A/S, 2750 Ballerup (DK)
(72) Inventor: LAROCHE, Clément, Frederiksberg (DK); NOZAL, Diego Caviedes, København Ø (DK)
(74) Representative: Aera A/S

(57) **Abstract**

An audio device is disclosed. The audio device comprises memory, an interface, and one or more processors. The one or more processors comprise a first neural network configured to operate according to a plurality of different machine learning, ML, models comprising a first model and a second model. The one or more processors are configured to obtain audio data, to process the audio data for provision of an audio output, to process, using the first model, the audio data for provision of a first model output, to process, using the second model, the audio data for provision of a second model output, to determine, based on the first model output and optionally based the second model output, an uncertainty parameter, and to control the processing of the audio data based on the uncertainty parameter.

## Description

The present disclosure pertains to the field of audio devices and methods of operating audio devices, and in particular to audio devices with uncertainty quantification and related methods.

### BACKGROUND

Signal processing, such as using Deep Neural Networks (DNN), along with other types of neural networks, are rapidly becoming integral components of electronic devices, such as audio devices, due to their ability to tackle previously unsolvable problems using traditional methods. With the continuous advancement and increased usage of neural networks, e.g., in audio signal processing, the reliability of their predictions is becoming increasingly important. Unfortunately, conventional neural networks do not provide reliable estimates of certainty and may suffer from over- or under-confidence, making them poorly calibrated. Thus, it may be hard to assess whether an output of a neural network is reliable, as several factors involved in the training of the neural network may lead to the output of a neural network being erroneous.

### SUMMARY

The uncertainty of neural network predictions, particularly when dealing with unseen data, is a critical aspect of their robustness and reliability. When a neural network is trained, it learns patterns from the training dataset, which ideally generalize to new, unseen data. However, the network's ability to generalize can be compromised if the unseen data differ significantly from the training data, a phenomenon known as distributional shift.

In the context of unseen data, uncertainty can be categorized into two types: aleatoric and epistemic. Aleatoric uncertainty arises from the inherent noise and randomness in the data itself, which cannot be reduced even with more data. On the other hand, epistemic uncertainty, also known as model uncertainty, stems from the model's lack of knowledge and can be reduced as the model learns from more data.

Traditional neural networks do not inherently distinguish between these types of uncertainty, and they often produce point estimates without accompanying measures of confidence. This can be problematic when the network encounters unseen data, as it may make predictions with high confidence that are, in reality, highly uncertain. This lack of reliable uncertainty estimates can lead to overconfidence in the network's predictions, which may not accurately reflect the true likelihood of the outcomes, especially in the presence of novel inputs that the network has not been trained on.

The deployment of DNN in products can be difficult due to a few factors: the lack of expressiveness and transparency of a DNN's inference model, which makes it difficult to trust its outcomes, the inability to distinguish between in-domain and out of domain samples and the sensitivity to domain shifts (generalization problem), and the inability to provide reliable uncertainty estimates for a deep neural network's decision and frequently occurring overconfident predictions.

Accordingly, there is a need for audio devices with uncertainty quantification and methods of operating an audio device, which may mitigate, alleviate, or address the shortcomings existing and may provide improved uncertainty quantification and in turn improved signal processing.

An audio device is disclosed. The audio device may be configured to act as a receiver device and/or a transmitter device. The audio device comprises memory, an interface, and one or more processors. Optionally the audio device comprises one or more audio speakers and one or more microphones. The one or more processors comprise a first neural network configured to operate according to a plurality of different machine learning, ML, models comprising a first model and optionally a second model. The one or more processors are configured to obtain audio data. In other words, the audio device may be configured to obtain audio data using the one or more processors. The one or more processors are configured to process the audio data for provision of an audio output. In other words, the audio device may be configured to process the audio data for provision of an audio output using the one or more processors. The one or more processors are configured to process, using the first model, the audio data for provision of a first model output. Optionally, the one or more processors are configured to process, using the second model, the audio data for provision of a second model output.

The one or more processors are configured to determine, based on the first model output and optionally based the second model output, an uncertainty parameter, e.g., indicative of an uncertainty of processing quality and/or of an uncertainty of prediction. In other words, the audio device may be configured to determine, based on the first model output and optionally based the second model output and using the one or more processors, an uncertainty parameter indicative of an uncertainty of processing quality. The one or more processors are configured to control the processing of the audio data for provision of the audio output based on the uncertainty parameter. In other words, the audio device may be configured to control, using the one or more processors, the processing of the audio data for provision of the audio output based on the uncertainty parameter.

A method of operating an audio device is disclosed, such as an audio device as disclosed herein. The method comprises obtaining audio data. The audio device may comprise a memory, an interface, and one or more processors, the one or more processors comprising a first neural network configured to operate according to a plurality of different machine learning, ML, models comprising a first model and a second model. The method comprises processing the audio data for provision of an audio output. The method comprises processing, using the first model, the audio data for provision of a first model output and optionally process, using the second model, the audio data for provision of a second model output.

The method comprises determining, based on the first model output and optionally the second model output, an uncertainty parameter, e.g., indicative of an uncertainty of processing quality. The method comprises controlling the processing of the audio data for provision of the audio output based on the uncertainty parameter.

The present disclosure provides improved determination of uncertainty parameters of model outputs, such as improved determination of uncertainty parameters for predictions of machine learning models. In other words, the present disclosure may provide improved estimations of predictions of machine learning models, e.g., for robust voice pickup and/or denoising of audio signals. With the use of stochasticity in a neural network, e.g., during inference, the present disclosure provides more reliable and more robust estimate of predictions from a neural network.

The present disclosure provides improved determination of uncertainty parameters of processing quality, such as improved determination of uncertainty parameters of processing quality of a signal processor, e.g., a signal processor using DNN. The disclosed audio devices and related methods provide improved signal processing of input signals comprising audio, such as improved processing of audio data. In other words, the present disclosure may provide improved uncertainty parameter-based controlling of processing of audio data, such as improved uncertainty parameter-based controlling of processing of audio data by using stochastic inference. It may be appreciated that the present disclosure provides informed controlling of signal processing of audio data. The present disclosure may improve the efficiency and effectiveness of signal processing, such as signal processing using DNNs. For example, the present disclosure may improve the guiding of adaptive beamforming and filtering of residual noise.

For example, the present disclosure may prevent the inadvertent filtering of audio data that was not intended to be filtered out. The present disclosure may allow to estimate an uncertainty of model predictions.

Further, it may be appreciated that the present disclosure allows to quantify uncertainties of model predictions, such as neural network, NN, model predictions, which in turn allows to classify predictions and take more confident decisions for signal processing. By estimating the uncertainty of model predictions, it may be possible to take actions when the uncertainty parameter is indicative of a high uncertainty in model prediction, e.g., when a neural network uncertainty is high. For example, it may be possible to determine a drift of an autoencoder prediction, and in turn control the processing of the audio data based on the knowledge of the drifting of the autoencoder prediction, such as regularize the processing of a digital signal processor based on the knowledge of the drifting of the autoencoder prediction. In other words, the uncertainty parameter may be indicative of a drift of an autoencoder prediction.

The present disclosure provides improved feedback on the performance of signal processing, such as using DNNs, of audio data. It may be appreciated that the present disclosure provides easier tuning and integration of neural networks, such as DNNs, in audio devices. An advantage of the present disclosure is that feedback may be provided to a machine learning, ML, engineer in charge of the training and/or optimization for a specific product, such as an audio device. For example, this may in turn help to design better products, e.g., when the uncertainty parameters are recorded as part of the data analytics process. It may be appreciated that this in turn may help to know the range of values needed to target for an optimal training of a NN, such as a DNN.

### IBRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an example audio device according to the present disclosure,
Figs. 2A-2B show a flow chart of an example method according to the present disclosure,
Figs. 3A-3D show an example scenario where the technique as disclosed herein is applied, and
Figs. 4A-4D show an example scenario where the technique as disclosed herein is applied.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The figures are schematic and simplified for clarity, and they merely show details which aid understanding the disclosure, while other details have been left out. Throughout, the same reference numerals are used for identical or corresponding parts.

An audio device is disclosed. The audio device may be configured to act as receiver device and/or a transmitter device. In other words, the audio device is configured to receive input signals, such as audio data, from an audio device configured to act as a transmitter device or vice versa. The audio device as disclosed herein may comprise one or more interfaces, one or more audio speakers, one or more microphones, e.g., including a first microphone, one or more processors, and one or more memories. The one or more interfaces may comprise one or more of: a wireless interface, a wireless transceiver, an antenna, an antenna interface, a microphone interface, and a speaker interface.

Further, the audio device may comprise one or more microphones, such as a first microphone, optionally a second microphone, optionally a third microphone and optionally a fourth microphone. The audio device may comprise one or more audio speakers, such as audio receivers, e.g., loudspeaker(s).

The audio device may be seen as an audio device configured to obtain audio data, such as input signals, e.g., audio signals, output audio signals, and process input signals, such as audio signals. The audio device may be seen as or comprise a headset, a speakerphone, and/or a video-bar. The audio device may for example be seen as a conference audio device, e.g., configured to be used by a party (such as one or more users at a near-end) to communicate with one or more other parties (such as one or more users at a far-end). The audio device configured to act as a receiver device may also be configured to act as a transmitter device when transmitting back an output signal to the far-end. The receiver audio device and the transmitter audio device may therefore switch between being receiver audio device and transmitter audio device. The audio device may be seen as a smart audio device. The audio device may be used for a conference and/or a meeting between two or more parties being remote from each other. The audio device may be used by one or more users in a vicinity of where the audio device is located, also referred to as a near-end. The audio device may be configured to output, such as using the audio speaker and based on the input signal, an audio device output at the receiver end. The audio device output may be seen as an audio output signal that is an output of the audio speaker at a near-end where the audio device and the user(s) of the audio device are located.

The audio device may be a single audio device. The audio device may be seen as a plurality of interconnected audio devices, such as a system, e.g., an audio device system. The system may comprise one or more users.

In one or more example audio devices, the interface comprises a wireless transceiver, also denoted as a radio transceiver, and an antenna for wireless transmission and reception of an input signal, such as an audio signal, such as for wireless transmission of an output signal and/or wireless reception of a wireless input signal. The audio device may be configured for wireless communication with one or more electronic devices, such as another audio device, a smartphone, a tablet, a computer and/or a smart watch. The audio device optionally comprises an antenna for converting one or more wireless input audio signals to antenna output signal(s). The audio device system and/or the audio device, may be configured for wireless communications via a wireless communication system, such as short-range wireless communications systems, such as Wi-Fi, Bluetooth, Zigbee, IEEE 802.11, IEEE 802.15, infrared and/or the like.

The audio device system and/or the audio device, may be configured for wireless communications via a wireless communication system, such as a 3GPP system, such as a 3GPP system supporting one or more of: New Radio, NR, Narrow-band IoT, NB-IoT, and Long Term Evolution - enhanced Machine Type Communication, LTE-M, millimeter-wave communications, such as millimeter-wave communications in licensed bands, such as device-to-device millimeter-wave communications in licensed bands.

In one or more example audio device systems and/or audio devices, the interface of the audio device comprises one or more of: a Bluetooth interface, Bluetooth low energy interface, and a magnetic induction interface. For example, the interface of the audio device may comprise a Bluetooth antenna and/or a magnetic interference antenna.

In one or more example audio devices, the interface may comprise a connector for wired communication, via a connector, such as by using an electrical cable. The connector may connect one or more microphones to the audio device. The connector may connect the audio device to an electronic device, e.g., for wired connection. The connector may be seen as an electrical connector, such as a physical connector for connecting the audio device via an electrical wire to another device.

The one or more interfaces can be or comprise wireless interfaces, such as transmitters and/or receivers, and/or wired interfaces, such as connectors for physical coupling. For example, the audio device may have an input interface configured to receive data, such as a microphone input signal. In one or more example audio devices, the audio device can be used for all form factors in all types of environments, such as for headsets and/or video conference equipment. For example, the audio device may not have a specific microphone placement requirement. In one or more example audio devices, the audio device may comprise an external microphone.

The one or more processors comprise a first neural network configured to operate according to a plurality of different machine learning, ML, models comprising a first model and a second model. In other words, the first neural network, such as the one or more processors, may be configured to operate according to n models. For example, the first neural network, such as the one or more processors, may be configured to operate according to different neural network configurations and/or different model configurations. In other words, the first model and the second model may be seen as having different neural network configurations and/or different model configurations.

In one or more example embodiments, the first model and the second model may be the same ML model, where the first model and/or the second model have one or more nodes (such as neurons) that are deactivated (such as dropping out one or more neurons). Thereby, when one or more nodes of the ML model are deactivated, the first model and the second model may effectively be seen as different ML models. In other words, the first model and the second model may be seen as the same model but having different model configurations. The audio device may for example use a Monte-Carlo dropout technique for performing the above. The audio device may estimate uncertainty of the first neural network by randomly dropping out (such as deactivating) some of the neurons in the first neural network. The dropping out of neurons may be performed during training and/or inference. For example, the audio device may sample multiple dropout masks (such as the first model and the second model being seen as dropout masks) and process an output for each dropout mask. Then, the audio device may determine the uncertainty parameter based on the outputs of the dropout masks. In some examples, the audio device may determine the variance of the multiple predictions of the dropout masks. The uncertainty parameter may provide a measure of the uncertainty in the first neural network's prediction.

In one or more example embodiments, the first model and the second model may be different ML models. The first model and the second model may be seen as different ML models. In other words, the first model and the second model may be seen as the different models having different neural network configurations. For example, the first model and the second model may be seen as different models being operated and/or executed by the same neural network, such as the first neural network. The audio device may for example use a Monte-Carlo drop-out technique for performing the above. For example, the audio device may train multiple different models (such as the first model and the second model) independently, e.g., on the same datasets, and then combining the predictions of the different models for determining the uncertainty parameter. The uncertainty parameter may be seen as an estimate of the target variable of the first neural network. An ensemble method technique may be used for regression tasks, classification tasks, and/or generative modelling. In some examples, the audio device may determine the variance and/or standard deviation of the multiple predictions of the different models.

The uncertainty parameter may provide a measure of the uncertainty in the different model's predictions.

In one or more example audio devices, the ML models, such as the first model and the second model, comprise model layers including an input layer, one or more intermediate layers, and an output layer for processing of the audio data, such as the audio input signal. In other words, the input layer, the one or more intermediate layers, and/or the output layer may be seen as layers of the ML models, such as the first model and the second model, such as layers of the first neural network. The one or more intermediate layers may be considered as hidden layers (such as hidden features). The one or more intermediate layers may include a first intermediate layer. A model as referred to herein (such as the first model and the second model) may be seen as a model and/or a scheme and/or a mechanism and/or a method configured to process, such as based on one or more processing schemes and/or a previous model, the audio data.

In one or more example audio devices, a model as referred to herein may be stored on a non-transitory storage medium (for example, on the memory of the audio device). The model may be stored on a non-transitory storage medium of the audio device being configured to execute the model. In one or more example audio devices, the model may comprise model data and or computer readable instructions. The model data and/or the computer readable instructions may be used by the audio device. The model (such as model data and/or the computer readable instructions) may be used by the audio device to process the audio data, such as the audio input signal.

The audio device is configured to obtain, such as using the one or more processors and/or via the interface, audio data. In one or more example audio devices, the audio device may be configured to obtain an input signal, such as an audio signal, from a transmitter device. In one or more example audio devices, the audio device is configured to obtain the audio data from a far-end, such as a far-end party or user(s). For example, the processor may be configured to obtain audio data via one or more microphones of the audio device, such as microphones associated with and/or comprised in the audio device. The audio data may comprise and/or be based on one or more audio signals obtained by the audio device. In other words, the transmitter device may be seen as an audio device at a far-end. The audio data may be seen as data comprising audio. In one or more embodiments or examples, the audio signal has undergone signal processing, such as encoding, compression, and/or enhancement, at the transmitter device. The audio data may be indicative of an audio signal generated by user(s) at the far-end. In other words, the audio data may be indicative of speech, such as speech from the far-end transmitter device. The audio data may be based on and/or be seen as an output signal of the transmitter device, such as of a signal processor of the transmitter device. To obtain the audio data may comprise to retrieve and/or receive the audio data. The audio data may be based on input signal(s), such as speech, from the near-end when obtained from one or more microphones, such as a first microphone and/or a second microphone, of the audio device. The audio data may be based on the input signal(s), such as based on a first microphone input signal, a second microphone input signal, and/or a transceiver input signal.

The audio device is configured to process, such as using the one or more processors, the audio data for provision of an audio output. To process the audio data for provision of an audio output may comprise to perform one or more audio processing steps of the audio data. For example, to process the audio data for provision of an audio output may comprise to perform, such as using a signal processor, noise reduction, such as background noise reduction, of the audio data, e.g., for provision of a denoised audio output. Another example may comprise to process the audio data for provision of an audio output may comprise to perform, such as using a signal processor, filtering of the audio data for provision of a filtered audio output. Further, to process the audio data for provision of an audio output may comprise to perform compression of the audio data.

The audio device is configured to process, such as using the one or more processors and using the first model, the audio data for provision of a first model output.

A model as referred to herein (such as the first model and the second model) may be seen as a model and/or a scheme and/or a mechanism and/or a method configured to process, such as based on one or more processing schemes and/or a previous model, the audio data.

The first model may be seen as a predictor model or engine configured to operate according to a first prediction model. The first neural network may be configured to process the audio data using the first model. The first model may for example comprise or make use of a neural network, artificial intelligence, deep learning, and/or machine learning, such as the first neural network. The first neural network may be seen as a first deep neural network. The first model may be seen as a model for signal processing. For example, the first model may be configured to process the audio data for providing a first signal processing mask.

In one or more example embodiments, the first neural network is configured to provide a mask for guiding an adaptive beamformer, such as an adaptive beamformer of the audio device.

In one or more example embodiments, the first model output is a first mask output and the second model output is a second mask output.

For example, in an audio device, such as a headset, the one or more processors (such as a digital signal processor) may use the first neural network and the first model in the signal path to provide a first mask to guide an adaptive beamformer and/or to filter out residual noise from the audio data. The first neural network, such as the first model, may predict a first mask at each frame that updates the direction of the beam. In other words, the first model output may be seen as a first mask output.

The audio device is configured to process, such as using the one or more processors and using the second model, the audio data for provision of a second model output.

The second model may be seen as a predictor model or engine configured to operate according to a second prediction model. The first neural network may be configured to process the audio data using the second model. The second model may for example comprise or make use of a neural network, artificial intelligence, deep learning, and/or machine learning, such as the first neural network. The first neural network may be seen as a first deep neural network. The second model may be seen as a model for signal processing. For example, the second model may be configured to process the audio data for providing a second signal processing mask.

For example, in an audio device, such as a headset, the one or more processors (such as a digital signal processor) may use the first neural network and the second model in the signal path to provide a second mask to guide an adaptive beamformer and/or to filter out residual noise from the audio data. The first neural network, such as the second model, may predict a second mask at each frame that updates the direction of the beam. In other words, the second model output may be seen as a second mask output.

In other words, a DNN may predict a mask at each frame that updates the direction of the beam of a beamformer of the audio device. When high uncertainty is detected in the predictions, e.g., in the uncertainty parameter, the audio device may refrain from updating the covariance matrices of the beamformer, hence preventing the beamformer to oscillate (due to error in the prediction) and preserve the speech quality. Furthermore, when the mask for the residual noise has high uncertainty (e.g., presence of a jammer, high noise, strange noise in the audio data, for example due to voice artefacts due to sickness, that the first neural network has not been trained on), the audio device may apply a more conservative noise reduction to preserve the voice of the user. Uncertain events like these may be logged and reported back in order to improve the next models.

In one or more example embodiments, the one or more processors comprise a digital signal processor, and wherein the method comprises outputting the uncertainty parameter to the digital signal processor. The digital signal processor may be configured to operate according to the first neural network and/or a second neural network. The digital signal processor may be configured to process, based on the uncertainty parameter, the audio data, e.g., using the first neural network and/or second neural network.

For example, the digital signal processor may comprise a denoiser and/or an echo controller, such as a deep noise reduction, DNS, denoiser configured to operate according to a neural network, NN, such as a DNN. To control the processing of the audio data, e.g., by the digital signal processor, based on the uncertainty parameter may comprise removing and/or reducing the masking of regions of a Time-Frequency, T-F, spectrum of the audio data and let the entire audio data (e.g., a speech signal including noise) through in the regions where the signal-to-noise ratio and/or higher mean opinion score is high. For example, for audio data being different from the training audio data, the audio device, such as the digital signal processor, may not need to perform noise reduction since it may compromise the audio data by removing too much of the audio signal, or by introducing processing artefacts.

It may be appreciated that the first model output and the second model output are different. For example, the first model output and the second model output may be seen as different predictions from different models when processing the same audio data. The processing of the same audio data with different models may enable to perform a stochastic inference of the signal processing of the audio data with the first neural network.

The audio device is configured to determine, such as using the one or more processors and based on the first model output and the second model output, an uncertainty parameter.

For example, the audio device may be configured to determine an uncertainty parameter based on one or more characteristics of the first model output and the second model output. In one or more examples or embodiments, the audio device may be configured to determine an uncertainty parameter based on different predictions of different models using the first neural network. In other words, the audio device is configured to determine an uncertainty parameter indicative of an uncertainty in estimating processing quality of the audio data by the audio device across different models. The uncertainty parameter may be indicative of an estimate of the quality of the outcome of the processing of the audio data with different models (such as the first model and the second model), and in turn an estimate of the quality of the audio output when processed by the different models. For example, the uncertainty parameter may be indicative of an estimate of the quality of the outcome of the processing of the audio data by the digital signal processor as disclosed herein using the first neural network, e.g., using the first model and the second model. Formulated differently, the uncertainty parameter may be indicative of an uncertainty of prediction of the processing of the audio data by the digital signal processor as disclosed herein. For example, the uncertainty parameter may be indicative of an uncertainty of prediction of the processing of the audio data by the digital signal processor using the first neural network as disclosed herein across different models. In other words, the uncertainty parameter may be indicative of an estimate of a reconstruction quality of the outcome of the processing of the audio data, such as an estimate of a reconstruction quality of the audio output when applying the first model output and/or the second model output, compared to the original audio signal that the audio data is based on. For example, when the audio data is based on an audio signal being similar to the training audio signals, the uncertainty parameter may indicate that the processing quality of the audio data will result in a good reconstruction quality compared to the original audio signal that the audio data is based on. On the other hand, when the audio data is based on an audio signal being different to the training audio signals, the uncertainty parameter may indicate that the processing quality of the audio data will result in a poor reconstruction quality compared to the original audio signal that the audio data is based on. The uncertainty parameter may be seen as a prediction of processing quality of the audio data by the audio device using the first neural network when operating different models. The uncertainty parameter may be seen as an estimate of how confident the audio device is on the processing quality when using the digital signal processor, such as the first neural network, for a given input, e.g., for given audio data, across different models. For example, the uncertainty parameter may be seen as an estimate of the confidence of the processing quality by the first neural network for a given input, such as for given audio data. Nevertheless, an uncertainty parameter indicative of a high uncertainty of processing quality may still result in a good processing quality of the audio data and vice versa an uncertainty parameter indicative of a low uncertainty of processing quality may result in a poor processing quality of the audio data. The uncertainty parameter may comprise a mean score and/or a variance of the different predictions when using different models, such as the first model and the second model. The uncertainty parameter may give an indication on whether or to which degree the first model output and/or the second model output should be used for the processing of the audio data for provision of the audio output.

In one or more examples or embodiments, the audio device is configured to determine, based on the first model output and the second model output, an uncertainty parameter indicative of an uncertainty of processing quality of the first neural network, e.g., across the first model and the second model.

For example, the uncertainty parameter may be a function of the first model output and the second model output. In other words, the first model output and the second model output may be used as inputs to determine the uncertainty parameter.

In one or more example embodiments, the audio device, such as the one or more processors, comprises an uncertainty parameter determiner configured to determine the uncertainty parameter based on the first model output and the second model output. The uncertainty quantification determiner may be seen as a module or a network configured to determine an uncertainty of processing of the first neural network based on model outputs from different models, such as the first model output and the second model output. The uncertainty parameter determiner may form part of the one or more processors, such as form part of the digital signal processor.

In one or more example embodiments, the audio device, such as the one or more processors, are configured to use of mixture models, e.g., the first model and/or the second model being mixture models. Mixture models may allow to perform direct uncertainty prediction based on the first model output and the second model output. For example, the first neural network may have neurons predicting a mean and a variance of the models.

In one or more example embodiments, the uncertainty parameter is based on the first mask output and the second mask output. In other words, the audio device, such as the one or more processors, may be configured to determine a variance and/or a mean of the first mask output and the second mask output and in turn derive the uncertainty parameter based on the variance and/or mean.

The audio device is configured to control, such as using the one or more processors, the processing of the audio data for provision of the audio output based on the uncertainty parameter.

In other words, the audio device is configured to control, based on the uncertainty parameter, the processing of the audio data by the one or more processors, e.g., in the signal path. For example, the audio device is configured to control, based on the uncertainty parameter, the processing of the audio data by the digital signal processor as disclosed herein. It may be appreciated that the processing of the audio data may be varied, such as adapted, depending on the uncertainty parameter. By controlling the processing of the audio data based on the uncertainty parameter, the present disclosure may improve the quality of processing and in turn the quality of the audio output. For example, the present disclosure may improve the reconstruction quality of the audio data and in turn improve the audio quality of the audio output. For example, when signal processing is performed in conditions which are outside of training conditions, the performance of the signal processing may be reduced. This could induce a lower speech quality, difficulty to hear the other end, and an overall a degraded experience. When a certain level of uncertainty in the processing quality has been identified (e.g., the uncertainty parameter being indicative of a high uncertainty of processing), the audio device may control the processing, such as the signal path, to rely less on the signal processing, e.g., using neural network prediction of the first neural network. Instead, the audio device may be configured to perform a more conservative signal processing using the first neural network and for example provide some feedback to the user, such as report data on the condition that caused problem to the signal processing.

In one or more example embodiments, the audio device, such as the one or more processors, is configured to output the uncertainty parameter to the digital signal processor and the digital signal processor may be configured to process the audio device based on the uncertainty parameter.

In one or more example embodiments, the first neural network is configured to operate according to a plurality of different ML models during inference. In other words, the audio device may be configured to process, using the first model, the audio data for provision of a first model output and process, using the second model, the audio data for provision of a second model output, to determine an uncertainty parameter based on the first model output and the second model output, and to control the processing of the audio data for provision of the audio output based on the uncertainty parameter during inference. During inference may be seen as during operation of the audio device and not only during training. Formulated differently, the audio device may be configured to perform stochastic inference with a plurality of different ML models during operation of the audio device.

In one or more example embodiments, to determine the uncertainty parameter comprises to determine a prediction variance based on the first model output and the second model output. In other words, the uncertainty parameter may comprise a prediction variance (and/or standard deviation) determined based on the first model output and the second model output. The prediction variance or standard deviation of the model predictions may provide a measure of uncertainty in the model's predictions. The prediction variance may be used as a parameter for controlling the processing of the transmission, Tx, path.

In one or more example embodiments, to determine the uncertainty parameter comprises to determine a prediction mean based on the first model output and the second model output. The prediction mean may be seen as a processed audio signal, such as speech signal.

In one or more example audio devices, the one or more processors are configured to determine whether the uncertainty parameter satisfies a first criterion. The first criterion may be seen as a criterion indicating when the uncertainty parameter is indicative of a low uncertainty of processing quality, such as a low uncertainty in estimating processing quality of given audio data. In other words, when the first criterion is satisfied, the uncertainty parameter may be indicative of a low prediction variance of the first model output and the second model output. For example, when the first criterion is satisfied, the uncertainty parameter may be indicative of an estimate of processing quality resulting in a good reconstruction quality or voice pickup of the audio data. The first criterion may comprise a first threshold. In one or more example audio devices, in accordance with the uncertainty parameter satisfying the first criterion, the one or more processors are configured to process the audio data according to a first signal processing scheme for provision of the audio output. It may be appreciated that the first criterion is satisfied when the uncertainty parameter is below or equal to the first threshold. For example, the uncertainty parameter may satisfy the first criterion when the prediction variance of the first model output and the second model output is below a first prediction variance threshold. To process the audio data according to a first signal processing scheme for provision of the audio output may comprise to process the audio data using the digital signal processor, such as using the first neural network and/or second neural network, for provision of the audio output. In other words, the first signal processing scheme may comprise instructions instructing the audio device to process the audio data with the digital signal processor using the first neural network, such as processing using only with the digital signal processor, e.g., using only the DNN. The first signal processing scheme may be seen as the normal operation when the first neural network is running on the audio device.

In one or more example audio devices, in accordance with the uncertainty parameter not satisfying the first criterion and/or in accordance with the uncertainty parameter satisfying a second criterion, the one or more processors are configured to process the audio data according to a second signal processing scheme for provision of the audio output. In other words, the one or more processors are configured to determine whether the uncertainty parameter satisfies a second criterion. For example, when the uncertainty parameter does not satisfy the first criterion, the audio device may be configured not to update the covariance matrices and hence preventing a beamformer of the audio device to oscillate (e.g., due to error in the prediction of the uncertainty parameter) and in turn preserving the speech quality of the audio data.

The second criterion may be seen as a criterion indicating when the uncertainty parameter is indicative of a medium uncertainty of processing quality. In other words, when the second criterion is satisfied, the uncertainty parameter is indicative of a medium uncertainty of processing quality, such as indicative of a medium reconstruction quality and/or voice pickup of the audio data.

It may be appreciated that the second criterion is satisfied when the uncertainty parameter is below or equal to the second threshold. For example, the uncertainty parameter may satisfy the second criterion when the prediction variance of the first model output and the second model output is below a second prediction variance threshold. The second criterion may comprise a second threshold.

It may be appreciated that the first criterion is not satisfied when the uncertainty parameter is above the first threshold. For example, the uncertainty parameter may not satisfy the first criterion when the prediction variance of the first model output and the second model output is above a first prediction variance threshold. It may be appreciated that when the uncertainty parameter does not satisfy the first criterion, the audio device may be configured to refrain from processing the audio data according to the first signal processing scheme.

To process the audio data according to a second signal processing scheme for provision of the audio output may comprise to process the audio data using a combination of the digital signal processor, such as using the first neural network, and the secondary processor for provision of the audio output. In other words, the second signal processing scheme may comprise instructions instructing the audio device to process the audio data with the digital signal processor using a combination of the first neural network and the second processor, such as processing using both the digital signal processor, e.g., using the DNN, and the secondary processor. The second signal processing scheme may be seen as a conservative operation.

In one or more example audio devices, in accordance with the uncertainty parameter not satisfying the first criterion and in accordance with the uncertainty parameter not satisfying the second criterion, the one or more processors are configured to process the audio data according to a third signal processing scheme for provision of the audio output.

It may be appreciated that the second criterion is not satisfied when the uncertainty parameter is above the second threshold. For example, the uncertainty parameter may not satisfy the second criterion when the prediction variance of the first model output and the second model output is above a second prediction variance threshold. It may be appreciated that when the uncertainty parameter does not satisfy the second criterion, the audio device is configured to refrain from processing the audio data according to the second signal processing scheme. When the first criterion and the second criterion are not satisfied, the uncertainty parameter may be indicative of a high uncertainty of processing quality, such as a high uncertainty in the predictions of the first model and the second model. In other words, when the first criterion and the second criterion are not satisfied, the uncertainty parameter is indicative of a high uncertainty of processing quality, such as indicative of a poor reconstruction quality of the audio data and/or a poor voice pickup of the audio data.

To process the audio data according to a third signal processing scheme for provision of the audio output may comprise to process the audio data using the secondary processor for provision of the audio output. In other words, the third signal processing scheme may comprise instructions instructing the audio device to process the audio data only with the secondary processor. The third signal processing scheme may be seen as a very conservative operation.

It may be appreciated that when the uncertainty parameter does not satisfy the first criterion and the uncertainty parameter does not satisfy the second criterion, the audio device may be configured to remove an abnormal portion of the audio data and/or fixate the digital signal processor using the first neural network instead of adapting to an abnormal situation that may occur when applying a neural network. For example, the one or more processors, such as the first neural network, may be configured to fixate one or more processing parameters (such as lock values for the digital signal processor) of the digital signal processor using the first neural network instead of adapting to an abnormal situation that may occur when applying a neural network.

In one or more example embodiments, the first neural network is configured to predict near-end speech for removing echo from far-end speech. In other words, the audio device, such as a speakerphone, is configured to predict near-end speech to remove echo from the far-end speech, such as the first neural network is configured to predict near-end speech to remove echo from the far-end speech.

In one or more example embodiments, the first model output is a first near-end speech prediction output and the second model output is a second near-end prediction output. In other words, each of the first model and the second model may be configured to perform speech prediction on the audio data for provision of different near-end speech predictions.

In one or more example embodiments, the uncertainty parameter is based on the first near-end speech prediction output and the second near-end speech prediction output.

In other words, the audio device, such as the one or more processors, may be configured to determine a variance and/or a mean of the first near-end speech prediction output and the second near-end speech prediction output and in turn derive the uncertainty parameter based on the variance and/or mean.

For example, when high uncertainties are detected in the prediction of the near-end speech, the audio device may undesirably suppress the user/near-end speech when processing the audio data. Similarly, these high uncertainty events could be logged in order to understand why the speakerphone is performing poorly and/or alert an IT service of the company that a room is problematic for online meetings.

Another example could be to use uncertainty measures (e.g., the uncertainty parameter) in a teleconferencing setup to assess the quality of the room's audio environment. If the neural network that controls the echo cancellation system frequently encounters high uncertainty in its predictions, it could suggest that the audio it receives is not «aligning» well with its trained expectations. This could be due to various factors such as poor room acoustics, inadequate microphone placement, and/or suboptimal speaker setup, which can all contribute to echoes and sound distortions.

In one or more example embodiments, the audio device is a headset.

In one or more example embodiments, the audio device is a speakerphone.

In one or more example audio devices, the digital signal processor comprises a controller configured to determine a controller output based on the uncertainty parameter. In other words, the controller may be configured to receive the uncertainty parameter and to determine the controller output based on the uncertainty parameter.

In one or more example audio devices, to control the processing of the audio data for provision of the audio output comprises to control the processing of the audio data based on the controller output. In other words, the controller output may be used as an input to the processing of the audio data for provision of the audio output.

The controller may be configured to use the uncertainty parameter, to determine a controller output. To determine the controller output may comprise to determine a processing scheme for the processing of the audio data. For example, the controller may be configured to determine whether the audio data is to be processed more or less by the audio device, such as by the signal processor.

In one or more example audio devices, the one or more processors comprise a secondary processor different from the digital signal processor. The secondary processor may be seen as an alternative processor, such as a secondary signal processor different from the digital signal processor using the second neural network. For example, the secondary processor may be configured to perform signal processing without using a neural network, e.g., using conventional signal processing instead. The secondary processor may be configured as a different signal processing path in the audio device, such as a secondary signal processing path. The digital signal processor may be seen as a primary signal processing path. In one or more example audio devices, the digital signal processor and the secondary processor are comprised in the same processor. In other words, the digital signal processor may comprise both the digital signal processor as disclosed herein and the secondary processor. In one or more example audio devices, the digital signal processor and the secondary processor are comprised in different processors.

In one or more example audio devices, to process the audio data for provision of an audio output comprises to process the audio data for provision of a secondary output different from the primary output using the secondary processor, wherein the audio output is based on the secondary output. In one or more example audio devices, the secondary output is determined based on the uncertainty parameter. In other words, the secondary output may be used as an input to the processing of the audio data for provision of the audio output.

In one or more example audio devices, the one or more processors comprise a mixer. In one or more example audio devices, to process the audio data for provision of an audio output comprises to mix the primary output and the secondary output for provision of a mixed output. In one or more example audio devices, to control the processing of the audio data may comprise to mix the primary output and the secondary output for provision of a mixed output. For example, the mixer may be configured to combine the primary output with the secondary output, e.g., with different weights, for provision of the mixed output. The mixer may for example be configured to add the primary output to the secondary output, e.g., with different weights, for provision of the mixed output. The controller may be configured to control how the mixer should mix the primary output and the secondary output. For example, the mixer may be configured to apply a mask-method partially. It may be appreciated that the mixing of the primary output and the secondary output may be weighted adaptively between the first criterion and second criterion as disclosed herein. For example, when the uncertainty parameter fluctuates between the first criterion and the second criterion the mixing of the primary output and the secondary output may be weighted adaptively between the first criterion and second criterion.

In one or more example audio devices, the audio output is based on the mixed output.

In one or more example audio devices, the audio output is based partly on the primary output and partly on the secondary output. For example, a first part of the audio output is based on the primary output and a second part of the audio output is based on the secondary output. In other words, the digital signal processor may be configured to process sub-parts of the audio data for provision of the primary output and/or the secondary processor may be configured to process sub-parts of the audio data for provision of the secondary output.

In one or more example audio devices, the controller may be configured to determine, based on the uncertainty parameter, which parts of the audio data are to be processed by digital signal processor and which parts of the audio data are to be processed by the secondary processor. By mixing the primary output and secondary output, the audio device may be configured to combine a conventional noise reduction with neural network approach.

In one or more example audio devices, the one or more processors are configured to output the audio output via the interface. In other words, the audio device may be configured to output the audio output via the wired and/or wireless interface such as to a far-end, and/or via the one or more speakers (such as receivers) at the near-end on the audio device itself.

A method of operating an audio device is disclosed, such as an audio device as disclosed herein. The audio device as disclosed herein may comprise a memory, an interface, and one or more processors, the one or more processors comprising a first neural network configured to operate according to a plurality of different machine learning, ML, models comprising a first model and a second model. The method comprises obtaining audio data. The method comprises processing the audio data for provision of an audio output. The method comprises processing, using the first model, the audio data for provision of a first model output and process, using the second model, the audio data for provision of a second model output. The method comprises determining an uncertainty parameter based on the first model output and the second model output. The method comprises controlling the processing of the audio data for provision of the audio output based on the uncertainty parameter.

It is to be understood that a description of a feature in relation to the audio device is also applicable to the corresponding feature in the method(s) of operating an audio device as disclosed herein and vice versa.

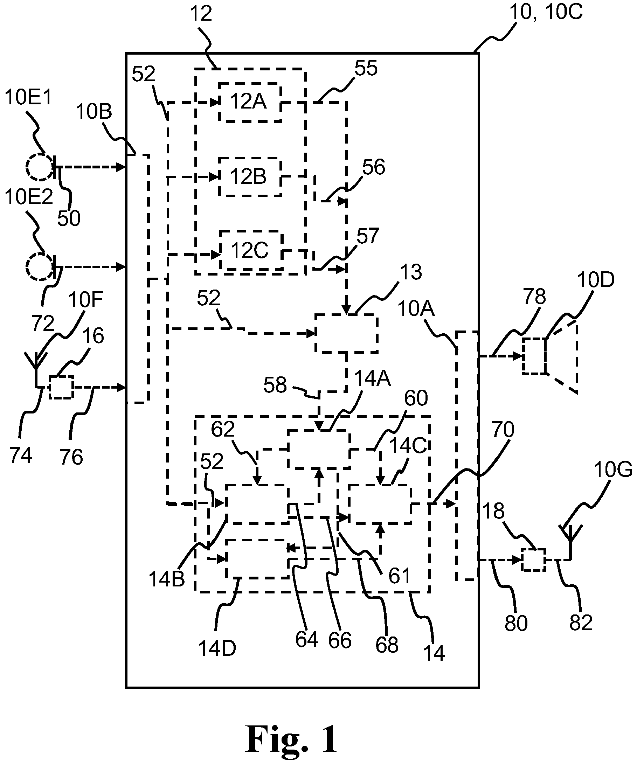

Fig. 1 schematically illustrates an example audio device, such as an audio device 10 according to the present disclosure. The audio device 10 may be seen as an audio communication device. The audio device 10 may be seen as a communication device for performing calls, such as audio and/or video calls. The audio device 10 may be seen as an audio device with uncertainty quantification-based processing.

The audio device 10 may be configured to act as a receiver device and/or a transmitter device. In other words, the audio device 10 may be configured to receive input signals from other audio devices configured to act as transmitter devices and/or configured to transmit output signals to other audio devices. The audio device 10 comprises an interface and a memory, (not shown). Optionally, the audio device 10 comprises an audio speaker 10D, and one or more microphones, such as a first microphone 10E1 and a second microphone 10E2. Optionally, the audio device 10 comprises one or more transceivers, such as a first wireless transceiver 10F and/or a second wireless transceiver 10G. The audio device 10 may be seen as an audio device configured to obtain audio signals, output audio signals, and process audio signals. The audio device 10 may be seen as a conference audio device, e.g., configured to be used by a party (such as one or more users at a near-end) to communicate with one or more other parties (such as one or more users at a far-end). In one or more example embodiments, the audio device 10 may be seen as a headset., e.g., configured to be used by a party (such as one or more users at a near-end) to communicate with one or more other parties (such as one or more users at a far-end). The audio device 10 may be seen as a smart audio device. The audio device 10 may be used for communication, conference, and/or a meeting between two or more parties being remote from each other. The audio device 10 may be used by one or more users in a vicinity of where the audio device 10 is located, also referred to as a near-end. In the present examples, the receiver end may be seen as the near-end and the transmitter end may be seen as the far-end.

The audio device 10 comprises one or more processors 10C. The one or more processors 10C are configured to obtain audio data. The audio device 10 may be configured to obtain, such as using the one or more processors 10C and/or via an input interface 10B, a first microphone input signal 50 from the first microphone 10E1, a second microphone input signal 72 from the second microphone 10E2, and/or a transceiver input signal 74 from the first transceiver. The first microphone input signal 50, the second microphone input signal 72, and/or the transceiver input signal 74 may be seen as input signals. In one or more example audio devices, the transceiver input signal 74 may be obtained via a first transceiver interface 16, e.g., as a transceiver interface input signal, and forwarded to the input interface 10B as a transceiver interface output 76. In one or more example audio devices, the audio device 10 is configured to obtain the input signal(s), such as the transceiver input signal 74, from a far-end, such as a far-end party or user(s). It may be appreciated that the input signal(s) comprises audio. In one or more embodiments or examples, the input signal(s), such as the transceiver input signal 74, has undergone signal processing, such as encoding, compression, and/or enhancement. The transceiver input signal 74 may be indicative of an audio signal generated by user(s) at the far-end. In other words, the transceiver input signal 74 may be indicative of speech, such as speech from a far-end transmitter device. The input signal(s) may be indicative of audio, such as speech, from the near-end when obtained from the first microphone 10E1 and/or the second microphone 10E2. The audio data may be based on the input signal(s), such as based on the first microphone input signal 50, the second microphone input signal 72, and/or the transceiver input signal 74. The input interface 10B may be configured to provide an input interface output 52 based on the first microphone input signal 50, the second microphone input signal 72, and/or the transceiver input signal 74. The audio data may be based on the input interface output 52.

The audio device 10 is configured to process, such as using the one or more processors 10C, the audio data for provision of an audio output. In other words, the audio device 10 is configured to process the first microphone input signal 50, the second microphone input signal 72, the transceiver input signal 74, and/or the input interface output 52 for provision of the audio output. The audio device 10 may comprise an output interface 10A configured to output the audio output. For example, the audio device 10 may be configured to output the audio output via the output interface 10A to the audio speaker 10D as an audio speaker input 78. The audio speaker 10D may be configured to output the audio output based on the audio speaker input 78, e.g., to output the audio output at the near-end. For example, the audio device 10 may be configured to output the audio output via the output interface 10A to the second wireless transceiver 10G as a second transceiver input 80. The second wireless transceiver 10G may be configured to output the audio output based on the second transceiver input 80, e.g., to output the audio output to the far-end. In one or more example audio devices, the second transceiver input 80 may be outputted via a second transceiver interface 18, e.g., as a second transceiver interface input signal, and forwarded to the second wireless transceiver interface 10G as a second transceiver output 82. It may be appreciated that the audio output may be based on and/or comprise the audio speaker input 78 and/or the second transceiver input 80.

The one or more processors 10C comprise a first neural network 12 configured to operate according to a plurality of different machine learning, ML, models comprising a first model 12A and a second model 12B. In one or more example embodiments, the first neural network 12 is configured to operate according to a number n of models illustrated by the box n'th model 12C.

The audio device 10, such as the one or more processors 10C, is configured to process, using the first model 12A, the audio data for provision of a first model output 55 and process, using the second model 12B, the audio data for provision of a second model output 56. In one or more example embodiments, the audio device 10, such as the one or more processors 10C, is configured to process, using the n'th model 12C, the audio data for provision of a n'th model output 57.

The audio device 10 is configured to determine, such as using the one or more processors 10C, an uncertainty parameter based on the first model output 55 and the second model output 56. In one or more example audio devices, the audio device 10 comprises an uncertainty quantification determiner 13. The uncertainty quantification determiner 13 may be configured to determine the uncertainty parameter based on the first model output 55 and the second model output 56.

In one or more example embodiments, the audio device 10 is configured to determine, such as using the one or more processors 10C, an uncertainty parameter based on the first model output 55, the second model output 56, and the n'th model output 57.

For example, the audio device 10 may be configured to determine an uncertainty parameter based on one or more characteristics of the first model output 55 and the second model output 56. In one or more examples or embodiments, the audio device 10 may be configured to determine an uncertainty parameter based on different predictions of different models using the first neural network 12. In other words, the audio device 10 is configured to determine an uncertainty parameter indicative of an uncertainty in estimating processing quality of the audio data by the audio device 10 across different models. The uncertainty parameter may be indicative of an estimate of the quality of the outcome of the processing of the audio data with different models (such as the first model and the second model), and in turn an estimate of the quality of the audio output when processed by the different models. For example, the uncertainty parameter may be indicative of an estimate of the quality of the outcome of the processing of the audio data by the digital signal processor 12, 14B as disclosed herein using the first neural network 12, e.g., using the first model 12A and the second model 12B. Formulated differently, the uncertainty parameter may be indicative of an uncertainty of prediction of the processing of the audio data by the digital signal processor as disclosed herein. For example, the uncertainty parameter may be indicative of an uncertainty of prediction of the processing of the audio data by the digital signal processor 12, 14B using the first neural network 12 as disclosed herein across different models. In other words, the uncertainty parameter may be indicative of an estimate of a reconstruction quality of the outcome of the processing of the audio data, such as an estimate of a reconstruction quality of the audio output when applying the first model output 55 and/or the second model output 56, compared to the original audio signal that the audio data is based on. For example, when the audio data is based on an audio signal being similar to the training audio signals, the uncertainty parameter may indicate that the processing quality of the audio data will result in a good reconstruction quality compared to the original audio signal that the audio data is based on. On the other hand, when the audio data is based on an audio signal being different to the training audio signals, the uncertainty parameter may indicate that the processing quality of the audio data will result in a poor reconstruction quality compared to the original audio signal that the audio data is based on. The uncertainty parameter may be seen as a prediction of processing quality of the audio data by the audio device using the first neural network 12 when operating different models. The uncertainty parameter may be seen as an estimate of how confident the audio device 10 is on the processing quality when using the digital signal processor 12, 14B, such as the first neural network 12, for a given input, e.g., for given audio data, across different models. For example, the uncertainty parameter may be seen as an estimate of the confidence of the processing quality by the first neural network 12 for a given input, such as for given audio data. Nevertheless, an uncertainty parameter indicative of a high uncertainty of processing quality may still result in a good processing quality of the audio data and vice versa an uncertainty parameter indicative of a low uncertainty of processing quality may result in a poor processing quality of the audio data. The uncertainty parameter may comprise a mean score and/or a variance of the different predictions when using different models, such as the first model 12A and the second model 12B. The uncertainty parameter may give an indication on whether or to which degree the first model output 55 and/or the second model output 56 should be used for the processing of the audio data for provision of the audio output.

In one or more examples or embodiments, the audio device 10 is configured to determine, based on the first model output 55 and the second model output 56, an uncertainty parameter indicative of an uncertainty of processing quality of the first neural network 12, e.g., across the first model 12A and the second model 12B.

The audio device 10 is configured to control the processing of the audio data for provision of the audio output based on the uncertainty parameter. In one or more example audio devices, the audio device 10, such as the one or more processors 10C, may comprise the signal processor 14.

In one or more example embodiments, the first neural network 12 is configured to provide a mask for guiding an adaptive beamformer of the audio device 10.

In one or more example embodiments, the first model output 55 is a first mask output and the second model output 56 is a second mask output.

In one or more example embodiments, the uncertainty parameter is based on the first mask output and the second mask output. In other words, the audio device 10, such as the one or more processors 10C, may be configured to determine a variance and/or a mean of the first mask output and the second mask output and in turn derive the uncertainty parameter based on the variance and/or mean.

In one or more example embodiments, to determine the uncertainty parameter comprises to determine a prediction variance based on the first model output 55 and the second model output 56. In other words, the uncertainty parameter may comprise a prediction variance (and/or standard deviation) determined based on the first model output 55 and the second model output 56. The prediction variance or standard deviation of the model predictions may provide a measure of uncertainty in the model's predictions. The prediction variance may be used as a parameter for controlling the processing of the transmission, Tx, path.

In one or more example embodiments, the first neural network 12 is configured to predict near-end speech for removing echo from far-end speech. In other words, the audio device 10, such as a speakerphone 10C, is configured to predict near-end speech to remove echo from the far-end speech, such as the first neural network 12 is configured to predict near-end speech to remove echo from the far-end speech.

In one or more example embodiments, the first model output 55 is a first near-end speech prediction output and the second model output 56 is a second near-end prediction output. In other words, each of the first model 12A and the second model 12B may be configured to perform speech prediction on the audio data for provision of different near-end speech predictions.

In one or more example embodiments, the uncertainty parameter is based on the first near-end speech prediction output and the second near-end speech prediction output.

In other words, the audio device 10, such as the one or more processors 10C, may be configured to determine a variance and/or a mean of the first near-end speech prediction output and the second near-end speech prediction output and in turn derive the uncertainty parameter based on the variance and/or mean.

In one or more example audio devices, the one or more processors 10C, such as the signal processor 14, comprises a digital signal processor 14B. In one or more example embodiments, the first neural network 12 may be operated by the digital signal processor 14B, e.g., the digital signal processor 14B may comprise the first neural network 12. In some embodiments, the digital signal processor may be distributed across the first neural network 12 and the signal processor 14. The digital signal processor 14B may be configured to operate the first neural network and/or a second neural network as disclosed herein.

The audio device 10 is configured to process, such as using the signal processor 14, the audio data for provision of an audio output. In other words, the audio device 10 is configured to process, using the signal processor 14, the first microphone input signal 50, the second microphone input signal 72, the transceiver input signal 74, and/or the input interface output 52 for provision of the audio output.

In one or more example audio devices, to process the audio data for provision of an audio output comprises to provide the audio data as input to the second neural network, such as an input 52 to the digital signal processor 14B, and to process the audio data using the first neural network and/or second neural network for provision of a primary output 66 based on the uncertainty parameter. For example, the digital signal processor 14B may be configured to process the audio data for provision of the primary output 66. Optionally, the digital signal processor 14B may be configured to process the audio data for provision of a feedback output 64. The digital signal processor 14B may be configured to output the feedback output 64 to a controller 14A. In other words, to process the audio data for provision of an audio output comprises to provide the audio data, such as the input interface output 52, as input to the signal processor 14 and to process the audio data using the signal processor 14, such as using the digital signal processor 14B, e.g., operating according to the first neural network and/or second neural network. In one or more example audio devices, the signal processor 14 is configured to process the audio data for provision of the audio output based on the uncertainty parameter. In one or more example audio devices, the signal processor 14 is configured to control the processing of the audio data for provision of the audio output based on the uncertainty parameter. The signal processor 14 may be configured to receive the uncertainty parameter from the uncertainty quantification determiner 13 and/or directly from the first neural network 12.

In one or more example audio devices, the first neural network comprises a deep neural network, DNN. In other words, the signal processor 14, such as the digital signal processor 14B, may comprise a DNN. For example, the signal processor 14, such as the digital signal processor 14B, may be configured to operate according the DNN.

In one or more example audio devices, the audio device 10, such as the one or more processors 10C, comprises a controller 14A. In one or more example audio devices, the signal processor 14, such as the digital signal processor 14B, comprises the controller 14A. The controller 14A may be configured to determine a controller output(s) 60, 61, 62, based on the uncertainty parameter. In other words, the controller 14A may be configured to receive the uncertainty parameter and to determine the controller output(s) 60, 61, 62 based on the uncertainty parameter.

In one or more example audio devices, to control the processing of the audio data for provision of the audio output comprises to control the processing of the audio data based on the controller output, such as one or more of controller outputs 60 61, 62. In other words, the controller output may be used as an input to the processing of the audio data for provision of the audio output. The controller 14A may be configured to use the uncertainty parameter, to determine the controller output(s) 60 61, 62. To determine the controller output 60 61, 62 may comprise to determine a processing scheme for the processing of the audio data. For example, the controller 14A may be configured to determine whether the audio data is to be processed more or less by the audio device 10, such as by the signal processor 14. In one or more example audio devices, the controller 14A may be configured to control the processing of the digital signal processor 14B based on the uncertainty parameter, such as based on the output 58.

In one or more example audio devices, the audio device 10, such as the one or more processors 10C, comprises a secondary processor 14D different from the digital signal processor 14B. The secondary processor 14D may be seen as an alternative processor, such as a secondary signal processor different from the digital signal processor 14B using the second neural network. For example, the secondary processor 14D may be configured to perform signal processing without using a neural network, e.g., using conventional signal processing instead.

In one or more example audio devices, to process the audio data for provision of an audio output comprises to process the audio data for provision of a secondary output 68 different from the primary output using the secondary processor, wherein the audio output is based on the secondary output. In one or more example audio devices, the secondary output is determined based on the uncertainty parameter. In other words, the secondary output may be used as an input to the processing of the audio data for provision of the audio output.

In one or more example audio devices, the controller 14A may be configured to control the processing of the digital signal processor 14B based on the uncertainty parameter, such as based on the output 58. For example, the controller 14A may be configured to control the processing of the digital signal processor 14B based on the uncertainty parameter by providing a controller output 62 to the digital signal processor 14B.

In one or more example audio devices, the controller 14A may be configured to control the processing of the secondary processor 14D based on the uncertainty parameter, such as based on the output 58. For example, the controller 14A may be configured to control the processing of the secondary processor 14D based on the uncertainty parameter by providing a controller output 61 to the secondary processor 14D.

In one or more example audio devices, the controller 14A may be configured to control the processing of a mixer 14C based on the uncertainty parameter, such as based on the output 58. For example, the controller 14A may be configured to control the processing of the mixer 14C based on the uncertainty parameter by providing a controller output 60 to the mixer 14C.

In one or more example audio devices, the audio device 10, such as the one or more processors 10C, comprise the mixer 14C. In other words, the signal processor 14 comprises the mixer 14C. In one or more example audio devices, the mixer 14C is configured to process the audio data for provision of an audio output comprises to mix the primary output 66 and the secondary output 68 for provision of a mixed output 70. In one or more example audio devices, to control the processing of the audio data may comprise to mix the primary output 66 and the secondary output 68 for provision of a mixed output 70. For example, the mixer 14C may be configured to combine the primary output 66 with the secondary output 68, e.g., with different weights, for provision of the mixed output 70. The mixer 14C may for example be configured to add the primary output 66 to the secondary output 68, e.g., with different weights, for provision of the mixed output 70. The controller 14A may be configured to control how the mixer 14C should mix the primary output 66 and the secondary output 68. For example, the mixer 14C may be configured to apply a mask-method partially.

In one or more example audio devices, the audio output is based on the mixed output 70. For example, the audio speaker input 78 and/or the second transceiver input 80 may be based on the mixed output 70.

It may be appreciated that the primary output 66 and/or the secondary output 68 may be outputted directly from the signal processor 14, such as outputted directly to the audio speaker 10D and/or the second transceiver 10G, e.g., via the output interface 10A. In other words, the primary output 66 and/or the secondary output 68 may be outputted directly from the signal processor 14 without going through the mixer 14C.

In one or more example audio devices, the audio output is based partly on the primary output 66 and partly on the secondary output 68. For example, a first part of the audio output is based on the primary output 66 and a second part of the audio output is based on the secondary output 68. In other words, the digital signal processor 14B may be configured to process sub-parts of the audio data for provision of the primary output 66 and/or the secondary processor 14D may be configured to process sub-parts of the audio data for provision of the secondary output 68.

In one or more example audio devices, the controller 14A may be configured to determine, based on the uncertainty parameter, which parts of the audio data are to be processed by digital signal processor 14B and which parts of the audio data are to be processed by the secondary processor 14D. By mixing the primary output 66 and secondary output 68, the audio device 10 may be configured to combine a conventional noise reduction with neural network approach.

In one or more example audio devices, the one or more processors 10C are configured to determine whether the uncertainty parameter satisfies a first criterion. In other words, the uncertainty quantification determiner and/or the signal processor 14 are configured to determine whether the uncertainty parameter satisfies a first criterion.

In other words, when the first criterion is satisfied, the uncertainty parameter is indicative of a low uncertainty of processing quality, such as indicative of a good reconstruction quality and/or voice pickup of the audio data. The first criterion may comprise a first threshold. In one or more example audio devices, in accordance with the uncertainty parameter satisfying the first criterion, the one or more processors 10C are configured to process the audio data according to a first signal processing scheme for provision of the audio output.

To process the audio data according to a first signal processing scheme for provision of the audio output may comprise to process the audio data using the digital signal processor 14B, such as using the first neural network, the second neural network, the first model output, and/or the second model output for provision of the audio output. In other words, the first signal processing scheme may comprise instructions instructing the audio device 10, such as signal processor 14, to process the audio data with the digital signal processor 14B using the first neural network, the second neural network, the first model output, and/or the second model output such as processing using only the digital signal processor 14B, e.g., using only the DNN. The first signal processing scheme may be seen as the "normal" operation.

In one or more example audio devices, in accordance with the uncertainty parameter not satisfying the first criterion and/or in accordance with the uncertainty parameter satisfying a second criterion, the one or more processors 10C are configured to process the audio data according to a second signal processing scheme for provision of the audio output. In other words, the uncertainty quantification determiner and/or the signal processor 14 are configured to determine whether the uncertainty parameter satisfies a second criterion.

The second criterion may be seen as a criterion indicating when the uncertainty parameter is indicative of a medium uncertainty of processing quality. In other words, when the second criterion is satisfied, the uncertainty parameter is indicative of a medium uncertainty of processing quality, such as indicative of a medium reconstruction quality of the audio data. To process the audio data according to a second signal processing scheme for provision of the audio output may comprise to process the audio data using a combination of the digital signal processor 14B, such as using the second neural network, and the secondary processor 14D for provision of the audio output. In other words, the second signal processing scheme may comprise instructions instructing the audio device 10, such as signal processor 14, to process the audio data with the digital signal processor 14B using a combination of the second neural network and the secondary processor 14D, such as processing using both the digital signal processor 14B, e.g., using the DNN, and the secondary processor 14D. The second signal processing scheme may be seen as a conservative operation.

In one or more example audio devices, in accordance with the uncertainty parameter not satisfying the first criterion and in accordance with the uncertainty parameter not satisfying the second criterion, the one or more processors 10C are configured to process the audio data according to a third signal processing scheme for provision of the audio output. When the first criterion and the second criterion are not satisfied, the uncertainty parameter may be indicative of a high uncertainty of processing quality. In other words, when the first criterion and the second criterion are not satisfied, the uncertainty parameter is indicative of a high uncertainty of processing quality, such as indicative of a poor reconstruction quality of the audio data. To process the audio data according to a third signal processing scheme for provision of the audio output may comprise to process the audio data using the secondary processor 14D for provision of the audio output. In other words, the third signal processing scheme may comprise instructions instructing the audio device 10, such as the signal processor 14, to process the audio data only with the secondary processor 14D. The third signal processing scheme may be seen as a very conservative operation.

For example, the audio speaker input 78 and/or the second transceiver input 80 may be based on the primary output 66 only. For example, the audio speaker input 78 and/or the second transceiver input 80 may be based on the secondary output 68 only.

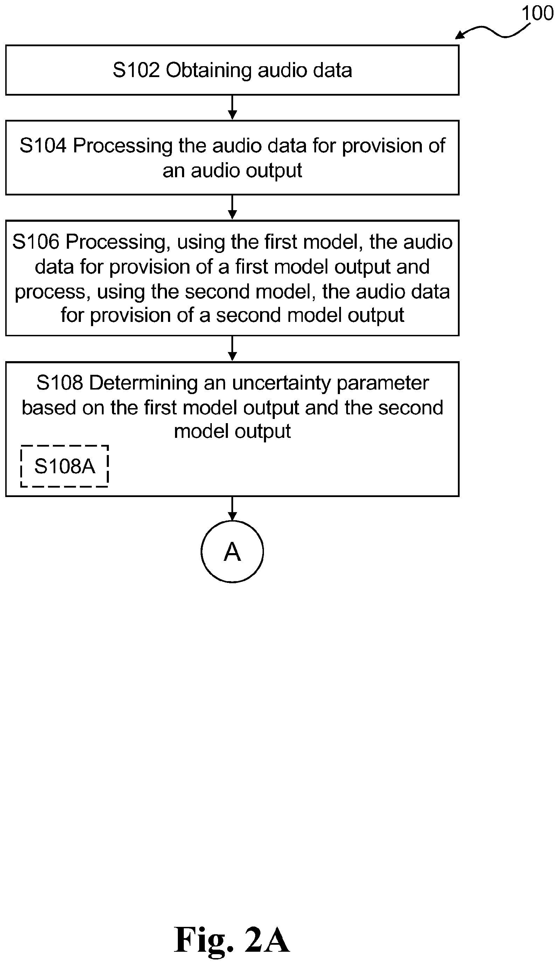

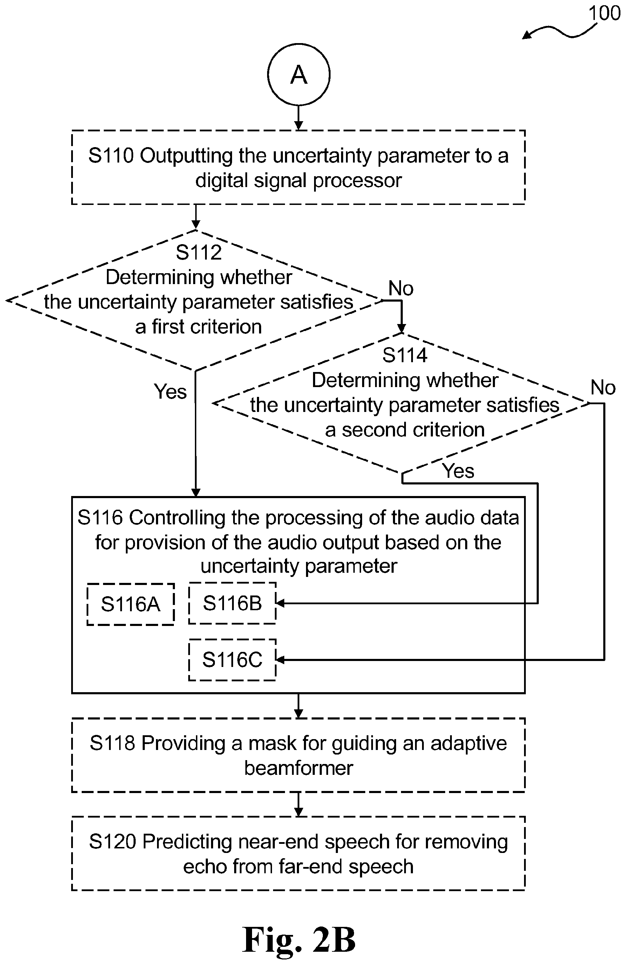

The audio device 10 may be configured to perform any of the methods disclosed in Figs. 2A-2B.

The processor 10C is configured to perform any of the operations disclosed in Figs. 2A-2B.

The operations of the audio device 10 may be embodied in the form of executable logic routines (for example, lines of code, software programs, etc.) that are stored on a non-transitory computer readable medium (for example, memory) and are executed by the one or more processors 10C).

Furthermore, the operations of the audio device 10 may be considered a method that the audio device 10 is configured to carry out. Also, while the described functions and operations may be implemented in software, such functionality may as well be carried out via dedicated hardware or firmware, or some combination of hardware, firmware and/or software.

Memory of the audio device may be one or more of a buffer, a flash memory, a hard drive, a removable media, a volatile memory, a non-volatile memory, a random access memory (RAM), or other suitable device. In a typical arrangement, memory may include a non-volatile memory for long term data storage and a volatile memory that functions as system memory for the processor 10C. The memory may exchange data with the processor 10C over a data bus. Control lines and an address bus between the memory and the processor 10C also may be present (not shown in Fig. 1). The memory is considered a non-transitory computer readable medium.

The memory may be configured to store information such as the first model, the second model, model outputs, neural networks, and/or uncertainty parameters as disclosed herein in a part of the memory.

Figs. 2A-2B show a flow diagram of an example method, such as a method 100.

A method 100 of operating an audio device is disclosed. The audio device as disclosed herein may comprise a memory, an interface, and one or more processors, the one or more processors comprising a first neural network configured to operate according to a plurality of different machine learning, ML, models comprising a first model and a second model. The method 100 comprises obtaining S102 audio data.

The method 100 comprises processing S104 the audio data for provision of an audio output.

The method 100 comprises processing S106, using the first model, the audio data for provision of a first model output and process, using the second model, the audio data for provision of a second model output.

The method 100 comprises determining S108 an uncertainty parameter based on the first model output and the second model output.

The method 100 comprises controlling S116 the processing of the audio data for provision of the audio output based on the uncertainty parameter.

In one or more example methods, determining S108 an uncertainty parameter comprises determining S108A a prediction variance based on the first model output and the second model output.

In one or more example methods, the method 100 comprises outputting S110 the uncertainty parameter to a digital signal processor.

In one or more example methods, the method 100 comprises determining S112 whether the uncertainty parameter satisfies a first criterion.

In one or more example methods, the method 100 comprises, in accordance with the uncertainty parameter satisfying the first criterion, processing S116A the audio data according to a first signal processing scheme for provision of the audio output.

In one or more example methods, the method 100 comprises determining S114 whether the uncertainty parameter satisfies a second criterion.

In one or more example methods, the method 100 comprises, in accordance with the uncertainty parameter not satisfying the first criterion and/or in accordance with the uncertainty parameter satisfying a second criterion, processing S116B the audio data according to a second signal processing scheme for provision of the audio output.

In one or more example methods, the method 100 comprises, in accordance with the uncertainty parameter not satisfying the first criterion and in accordance with the uncertainty parameter not satisfying the second criterion, processing S116C the audio data according to a third signal processing scheme for provision of the audio output.

In one or more example methods, the method 100 comprises providing S118 a mask for guiding an adaptive beamformer.

In one or more example methods, the method 100 comprises predicting S120 near-end speech for removing echo from far-end speech.

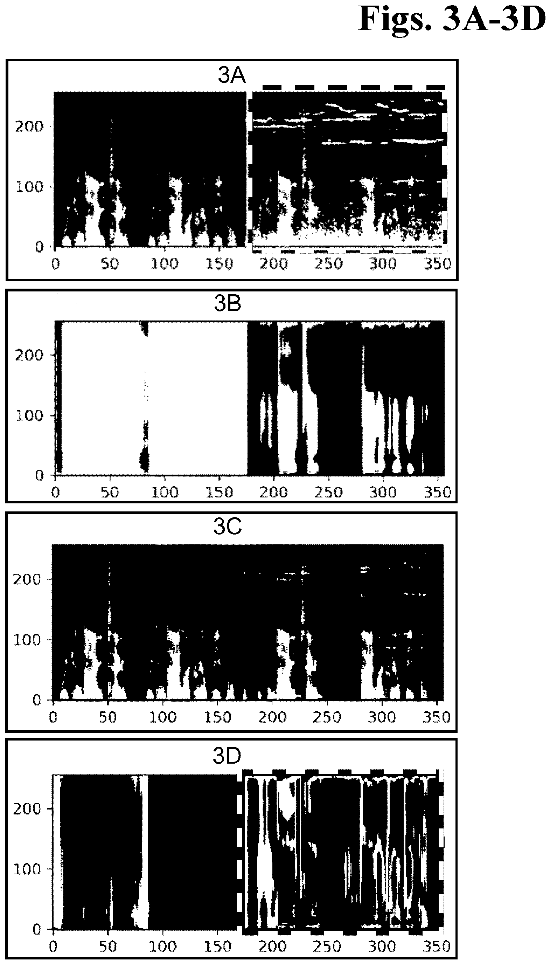

Figs. 3A-3D show an example scenario where the technique as disclosed herein is applied.

Fig. 3A shows an example of audio data obtained by the audio device as disclosed herein. As may be observed, the left side of the spectrogram is indicative of a clean signal with a low amount of noise, whereas the right side of the spectrogram in the dashed box is indicative of a noisy signal with a high amount of noise.

Fig. 3B shows an example model output, such as the first model output and/or the second model output, after the audio device has processed the audio data with the first model and/or the second model. In this example, the model output is a mask output configured to filter the audio data. As may be observed, the left side of the spectrogram indicates that the mask would keep most of the audio signal (the white parts), whereas the right side of the spectrogram indicates that the mask would remove large parts of the audio signal (the black parts).

Fig. 3D shows an example uncertainty parameter determined by the audio device based on the model output of Fig. 3B. In this example, the uncertainty parameter comprises a prediction variance determined based on the first model output and the second model output, such as the first mask output and the second mask output. As may be observed, the right side of the spectrogram indicates a high prediction variance when the signal is noisy.

Fig. 3C shows an example audio output after the audio device has controlled the processing of the audio data based on the uncertainty parameter. In this example, the audio output is an output spectrogram where the audio signal processing has been controlled based on the uncertainty parameter, such as based on the prediction variance of Fig. 3D.

The example of Figs. 3A-3D may for example be applied to an audio device being a headset. For example, in an audio device, such as a headset, the one or more processors (such as a digital signal processor) may use the first neural network and the first model in the signal path to provide a first mask to guide an adaptive beamformer and/or to filter out residual noise from the audio data. The first neural network, such as the first model, may predict a first mask at each frame that updates the direction of the beam. In other words, the first model output may be seen as a first mask output.

For example, in an audio device, such as a headset, the one or more processors (such as a digital signal processor) may use the first neural network and the second model in the signal path to provide a second mask to guide an adaptive beamformer and/or to filter out residual noise from the audio data. The first neural network, such as the second model, may predict a second mask at each frame that updates the direction of the beam. In other words, the second model output may be seen as a second mask output.

In other words, a DNN may predict a mask at each frame that updates the direction of the beam of a beamformer of the audio device. When high uncertainty is detected in the predictions, e.g., in the uncertainty parameter, the audio device may refrain from updating the covariance matrices of the beamformer, hence preventing the beamformer to oscillate (due to error in the prediction) and preserve the speech quality. Furthermore, when the mask for the residual noise has high uncertainty (e.g., presence of a jammer, high noise, strange noise in the audio data, for example due to voice artefacts due to sickness, that the first neural network has not been trained on), the audio device may apply a more conservative noise reduction to preserve the voice of the user. Uncertain events like these may be logged and reported back in order to improve the next models.

In another example, the example of Figs. 3A-3D may for example be applied to an audio device being a speakerphone. The first neural network may be configured to predict near-end speech for removing echo from far-end speech. In other words, the audio device, such as a speakerphone, may be configured to predict near-end speech to remove echo from the far-end speech, such as the first neural network may be configured to predict near-end speech to remove echo from the far-end speech. For example, when high uncertainties are detected in the prediction of the near-end speech, the audio device may undesirably suppress the user/near-end speech when processing the audio data. Similarly, these high uncertainty events could be logged in order to understand why the speakerphone is performing poorly and/or alert an IT service of the company that a room is problematic for online meetings.

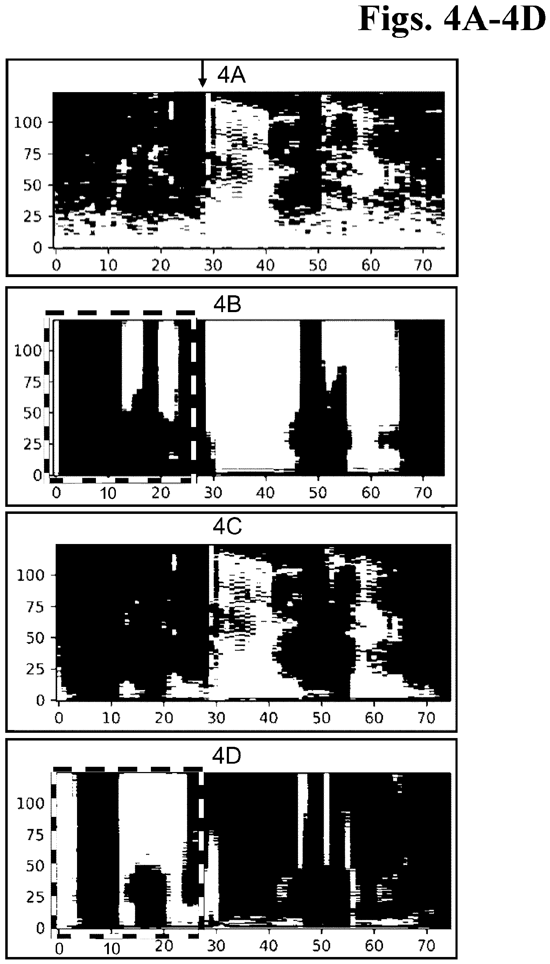

Figs. 4A-4D show an example scenario where the technique as disclosed herein is applied.

The spectrograms shown in Figs. 4A-4D are zoomed-in versions of the spectrograms of Figs. 3A-3D. The speech starts at the arrow in Fig. 4A. As may be observed, the first neural network presents difficulties in the transition from no-speech to speech, with high prediction variances observed in Fig. 4D (see dashed box). This shows a benefit of the presently disclosed technique. For example, the audio device may refrain from processing the audio data using the first neural network in the regions where the prediction variance is high across the model predictions.

Examples of audio devices, systems, and methods according to the disclosure are set out in the following items:
Item 1. An audio device comprising a memory, an interface, and one or more processors, the one or more processors comprising a first neural network configured to operate according to a plurality of different machine learning, ML, models comprising a first model and a second model, wherein the one or more processors are configured to:
   obtain audio data;
   process the audio data for provision of an audio output;
   process, using the first model, the audio data for provision of a first model output and process, using the second model, the audio data for provision of a second model output;
   determine an uncertainty parameter based on the first model output and the second model output; and
   control the processing of the audio data for provision of the audio output based on the uncertainty parameter.
Item 2. The audio device according to item 1, wherein the first neural network is configured to operate according to a plurality of different ML models during inference.
Item 3. The audio device according to any of the previous items, wherein to determine the uncertainty parameter comprises to determine a prediction variance based on the first model output and the second model output.
Item 4. The audio device according to any of the previous items, wherein the one or more processors comprise a digital signal processor, and wherein the method comprises outputting the uncertainty parameter to the digital signal processor.
Item 5. The audio device according to any of the previous items, wherein the one or more processors are configured to:
   - determine whether the uncertainty parameter satisfies a first criterion, and in accordance with the uncertainty parameter satisfying the first criterion, process the audio data according to a first signal processing scheme for provision of the audio output.
Item 6. The audio device according to item 5, wherein the one or more processors are configured to: in accordance with the uncertainty parameter not satisfying the first criterion and/or in accordance with the uncertainty parameter satisfying a second criterion, process the audio data according to a second signal processing scheme for provision of the audio output.
Item 7. The audio device according to item 6, wherein the one or more processors are configured to: in accordance with the uncertainty parameter not satisfying the first criterion and in accordance with the uncertainty parameter not satisfying the second criterion, process the audio data according to a third signal processing scheme for provision of the audio output.
Item 8. The audio device according to any of the previous items, wherein the first neural network is configured to provide a mask for guiding an adaptive beamformer.
Item 9. The audio device according to item 8, wherein the first model output is a first mask output and the second model output is a second mask output.
Item 10. The audio device according to item 9, wherein the uncertainty parameter is based on the first mask output and the second mask output.
Item 11. The audio device according to any of the previous items, wherein the first neural network is configured to predict near-end speech for removing echo from far-end speech.
Item 12. The audio device according to item 11, wherein the first model output is a first near-end speech prediction output and the second model output is a second near-end prediction output.
Item 13. The audio device according to item 12, wherein the uncertainty parameter is based on the first near-end speech prediction output and the second near-end speech prediction output.
Item 14. The audio device according to any of the previous items, wherein the audio device is a headset.
Item 15. The audio device according to any of the previous items, wherein the audio device is a speakerphone.
Item 16. Method (100) of operating an audio device comprising a memory, an interface, and one or more processors, the one or more processors comprising a first neural network configured to operate according to a plurality of different machine learning, ML, models comprising a first model and a second model, the method comprising:
   - obtaining (S102) audio data;
   - processing (S104) the audio data for provision of an audio output;
   - processing (S106), using the first model, the audio data for provision of a first model output and process, using the second model, the audio data for provision of a second model output;
   - determining (S108) an uncertainty parameter based on the first model output and the second model output; and
   - controlling (S116) the processing of the audio data for provision of the audio output based on the uncertainty parameter.
Item 17. The method according to item 16, wherein determining (S108) an uncertainty parameter comprises determining (S108A) a prediction variance based on the first model output and the second model output.
Item 18. The method according to any of items 16-17, the method comprising outputting (S110) the uncertainty parameter to a digital signal processor.
Item 19. The method according to any of items 16-18, the method comprising:
   - determining (S112) whether the uncertainty parameter satisfies a first criterion, and in accordance with the uncertainty parameter satisfying the first criterion, processing (S116A) the audio data according to a first signal processing scheme for provision of the audio output.
Item 20. The method according to item 19, the method comprising:
   - determining (S114) whether the uncertainty parameter satisfies a second criterion, and in accordance with the uncertainty parameter not satisfying the first criterion and/or in accordance with the uncertainty parameter satisfying a second criterion, processing (S116B) the audio data according to a second signal processing scheme for provision of the audio output.
Item 21. The method according to item 20, the method comprising:
   - in accordance with the uncertainty parameter not satisfying the first criterion and in accordance with the uncertainty parameter not satisfying the second criterion, processing (S116C) the audio data according to a third signal processing scheme for provision of the audio output.
Item 22. The method according to any of items 16-21, the method comprising:
   - providing (S118) a mask for guiding an adaptive beamformer.
Item 23. The method according to any of items 16-22, the method comprising:
   - predicting (S120) near-end speech for removing echo from far-end speech.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of' may be seen as "associated with", "related to", "descriptive of', "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably.

For example, a parameter determined "based on" a data set can be seen as a parameter determined "as a function of' the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

### LIST OF REFERENCES

- 10: audio device
- 10A: output interface
- 10B: input interface
- 10C: one or more processors
- 10D: audio speaker
- 10E1: first microphone
- 10E2: second microphone
- 10F: first wireless transceiver
- 10G: second wireless transceiver
- 12: first neural network, digital signal processor
- 12A: first model
- 12B: second model
- 12C: n'th model
- 13: uncertainty parameter determiner
- 14: signal processor
- 14A: controller
- 14B: digital signal processor
- 14C: mixer
- 14D: secondary processor
- 16: first transceiver interface
- 18: second transceiver interface
- 50: first microphone input signal
- 52: input interface output
- 55: first model output
- 56: second model output
- 57: n'th model output
- 58: output, uncertainty parameter determiner output
- 60: controller output
- 61: controller output
- 62: controller output
- 64: feedback output
- 66: primary output
- 68: secondary output
- 70: mixed output
- 72: second microphone input signal
- 74: transceiver input signal
- 76: transceiver interface output
- 78: audio speaker input
- 80: second transceiver input
- 82: second transceiver output

## Claims

1. An audio device comprising a memory, an interface, and one or more processors, the one or more processors comprising a first neural network configured to operate according to a plurality of different machine learning, ML, models comprising a first model and a second model, wherein the one or more processors are configured to:
obtain audio data;
process the audio data for provision of an audio output;
process, using the first model, the audio data for provision of a first model output and process, using the second model, the audio data for provision of a second model output;
determine an uncertainty parameter based on the first model output and the second model output; and
control the processing of the audio data for provision of the audio output based on the uncertainty parameter.

2. The audio device according to claim 1, wherein the first neural network is configured to operate according to a plurality of different ML models during inference.

3. The audio device according to any of the previous claims, wherein to determine the uncertainty parameter comprises to determine a prediction variance based on the first model output and the second model output.

4. The audio device according to any of the previous claims, wherein the one or more processors comprise a digital signal processor, and wherein the method comprises outputting the uncertainty parameter to the digital signal processor.

5. The audio device according to any of the previous claims, wherein the one or more processors are configured to:
- determine whether the uncertainty parameter satisfies a first criterion, and in accordance with the uncertainty parameter satisfying the first criterion, process the audio data according to a first signal processing scheme for provision of the audio output.

6. The audio device according to claim 5, wherein the one or more processors are configured to: in accordance with the uncertainty parameter not satisfying the first criterion and/or in accordance with the uncertainty parameter satisfying a second criterion, process the audio data according to a second signal processing scheme for provision of the audio output.

7. The audio device according to claim 6, wherein the one or more processors are configured to: in accordance with the uncertainty parameter not satisfying the first criterion and in accordance with the uncertainty parameter not satisfying the second criterion, process the audio data according to a third signal processing scheme for provision of the audio output.

8. The audio device according to any of the previous claims, wherein the first neural network is configured to provide a mask for guiding an adaptive beamformer.

9. The audio device according to claim 8, wherein the first model output is a first mask output and the second model output is a second mask output.

10. The audio device according to claim 9, wherein the uncertainty parameter is based on the first mask output and the second mask output.

11. The audio device according to any of the previous claims, wherein the first neural network is configured to predict near-end speech for removing echo from far-end speech.

12. The audio device according to claim 11, wherein the first model output is a first near-end speech prediction output and the second model output is a second near-end prediction output.

13. The audio device according to claim 12, wherein the uncertainty parameter is based on the first near-end speech prediction output and the second near-end speech prediction output.

14. The audio device according to any of the previous claims, wherein the audio device is a headset.

15. The audio device according to any of the previous claims, wherein the audio device is a speakerphone.

16. Method (100) of operating an audio device comprising a memory, an interface, and one or more processors, the one or more processors comprising a first neural network configured to operate according to a plurality of different machine learning, ML, models comprising a first model and a second model, the method comprising:
- obtaining (S102) audio data;
- processing (S104) the audio data for provision of an audio output;
- processing (S106), using the first model, the audio data for provision of a first model output and process, using the second model, the audio data for provision of a second model output;
- determining (S108) an uncertainty parameter based on the first model output and the second model output; and
- controlling (S116) the processing of the audio data for provision of the audio output based on the uncertainty parameter.
